# EUROPEAN PATENT SPECIFICATION

(11) **EP 3 272 637 B1**
(45) Date of publication and mention of the grant of the patent: **07.10.2020**
(21) Application number: 17767978.4
(22) Date of filing: 16.03.2017
(51) Int. Cl.: B63B 25/28, B63B 25/24, B60P 7/06, F16C 7/02

(54) **LASHING BAR FORMED OF COMPOSITE MATERIAL AND MANUFACTURING METHOD THEREFOR**
AUS VERBUNDSTOFFMATERIAL GEFORMTE ZURRSTANGE UND HERSTELLUNGSVERFAHREN DAFÜR
BARRE D'AMARRAGE FORMÉE DE MATÉRIAU COMPOSITE ET SON PROCÉDÉ DE FABRICATION

(30) Priority: 14.04.2016 KR 20160045712
(43) Date of publication of application: 24.01.2018
(73) Proprietor: OZ Industry co., ltd., Changwon City, Gyeongnam (KR)
(72) Inventor: OH, Young Hoan, Changwon-si Gyeongsangnam-do, 51217 (KR)
(74) Representative: M. Zardi & Co S.A.
(86) International application number: PCT/KR2017/002838
(87) International publication number: WO 2017/179823

(56) References cited:
- DE-A1-102006 060 469
- DE-A1-102007 015 909
- JP-A- H07 229 511
- KR-A- 20130 050 600
- KR-A- 20130 098 541
- KR-A- 20150 067 283
- KR-Y1- 200 209 551

## Description

### [Technical Field]

The present invention relates to the equipment used for the lashing of containers. More specifically, the invention relates to a lashing bar made of a composite material formed through the filament winding process to provide light weight and capacity to withstand high tensile loads, and a method of manufacturing the same.

### [Background Art]

Generally, on-deck containers refer to the boxes used for the efficient and cost-saving storage and transport of cargo.

Recently, extra-large container ships were developed for the purpose of reducing the shipping costs of containers, and these ships will often carry some thousands of containers on deck stacked more than six tiers high.

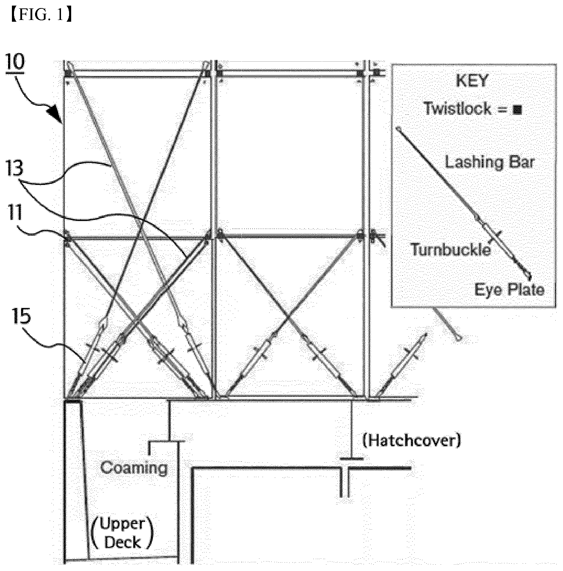

FIG. 1 shows the conventional container lashing equipment that is commonly used now.

As illustrated in the figure, the conventional containers (10) are clamped together using Twistlocks (11), which fasten the upper and lower tiers of the containers (10), and then lashing bars (13) and turnbuckles (15) are secured on deck with a crisscross lashing arrangement to reinforce the strength to withstand inclined and horizontal loads.

Lashing bars are generally used on container ships to prevent containers from shifting and tilting during transportation at sea, and they connect the corner fittings and turnbuckles of containers.

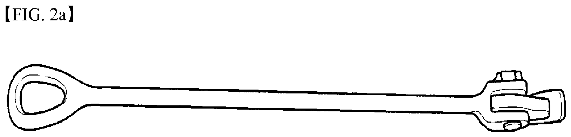

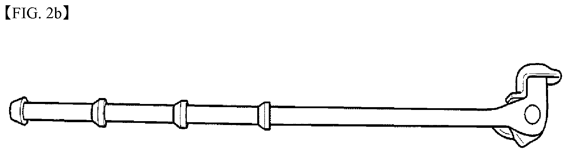

As shown in FIG. 2a and 2b, commonly used lashing bars are classified into eye type and knob type according their shapes.

The eye type lashing bar in FIG. 2a comprises a hook-shaped coupling member through which one end of the bar is secured to a container, and an oval coupling member on the other end.

The knob type lashing bar in FIG. 2b comprises a hook-shaped coupling member through which one end of the bar is secured to a container, and several stoppers on the other end to allow for length adjustments.

Meanwhile, a ship at sea moves in several degrees of motion, such as roll, pitch, and heave, and is affected by accelerations along the x, y, and z axes relative to different motions. Such acceleration causes a force on containers, which acts as a lashing force.

Lashing bars are therefore subject to strict control in accordance with marine safety control regulations so that containers are secured on deck with adequate strength higher than the design limit to withstand roll, pitch, and high winds while the ship moves at sea, and only those products whose performance has been tested by supervisory authorities are permitted to be used to meet the aforementioned standard.

To ensure adherence to these regulations, commonly used lashing bars are made of high tensile strength alloy steels including SCR4, SCM4, and SNCM8. However, products longer than 5m weight from 20 to 25kg each, and even products as long as 2.5 to 3m weight 10 to 15kg. These products cause fatigue in operators, as well as accidents during transportation, installation, and dismantling, resulting in such problems as reduced efficiency and avoidance of work.
DE 10 2006 060469 and DE 10 2007 015909 are examples of known lashing bars.

### [Detailed Description of the Invention]

### [Technical Problem]

It is therefore an object of the present invention to provide a lashing bar made of a composite material fabricated through filament winding and a method of manufacturing the same for the manufacture of lashing bars made of a composite material formed with continuous filament fibers that provides higher tensile strength at a lower specific gravity than any high-tensile steel.

### [Solution to Problem]

In order to solve the aforementioned problem, the present invention provides a lashing bar made of a composite material comprising a bar-shaped central portion encased in a composite material through the winding of continuous fibers around the outer circumference of a metal cylindrical core which constitutes the core of the central portion; an oval coupling portion formed at one end of the aforementioned bar-shaped central portion and having wound continuous fibers attached to the holes of hook-type thimbles made from metal; and a hook-shaped coupling portion formed at the other end of the aforementioned bar-shaped central portion and having wound continuous fibers attached to the holes of two ring-type thimbles made from metal.

In order to solve the aforementioned problem, the invention also provides a method of manufacturing lashing bars of a composite material comprising (1) a step in which a forming mold for the aforementioned lashing bar is assembled and loaded onto a filament winding machine; (2) a step in which continuous fibers are wound around the outer circumference of the aforementioned loaded lashing bar forming mold through the filament winding technique; and (3) a step in which the filament wound composite product is cured to form a lashing bar.

### [Advantages of the Invention]

An advantage of the present invention providing a lashing bar and a method of manufacturing the same is that it enables the manufacture of container lashing bars with light weight and capacity to withstand high tensile loads by forming a composite material through filament winding with continuous fibers including glass, carbon, and aramid fibers, which provide four to six times the tensile strength of high-tensile special steels at a specific gravity 25 to 35% lower than that of special steels, and by providing metal parts in certain areas where loads are concentrated.

Therefore, a lashing bar manufactured through the invention offers the advantages of maximizing efficiency during transportation and installation by radically lowering weight to 30 to 50% of the average weight of conventional metal lashing bars, thereby reducing accident rates and resolving the problem of work avoidance, and of allowing semi-permanent use by utilizing the corrosion resistance of the composite material, thereby solving the problem of limited service life for conventional metal products due to corrosion.

### [Brief Description of the Drawing]

FIG. 1 shows conventional container lashing equipment.
FIG. 2a and 2b are illustrative views of the shapes of conventional lashing bars made from metal.
FIG. 3 is a process flow chart to describe a method of manufacturing a lashing bar of a composite material according to the present invention.
FIG. 4 is a part drawing used in the manufacturing method of FIG. 3.
FIG. 5a to 5c show the process of winding continuous fibers through the filament winding technique used in the manufacturing method of FIG. 3.
FIG. 6 and 7 show the lashing bar made of a composite material according to the invention.

| | |
|---|---|
| 200: Lashing bar forming mold | 210: Cylindrical core |
| 220: Hook-type thimble | 230: Ring-type thimble |
| 240: Continuous fibers | 250: Container hook |
| 260: Bolt | 300: Lashing bar of a composite material |
| 310: Central portion | 320, 330: Coupling portions |

### [Preferred Embodiment of the Invention]

The following is a detailed description of a preferred embodiment of the present invention with reference to the accompanying drawings.

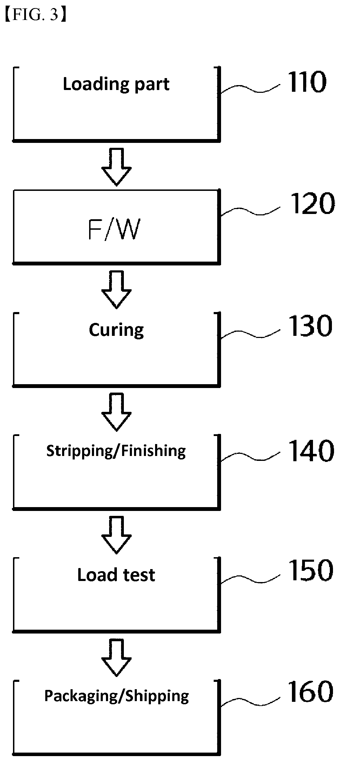

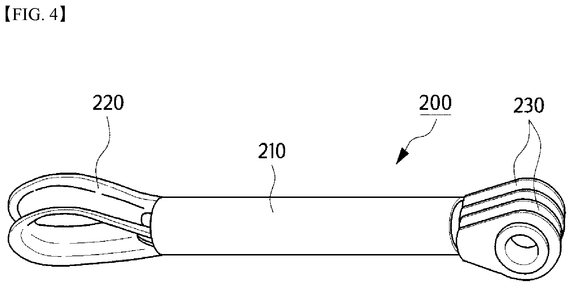

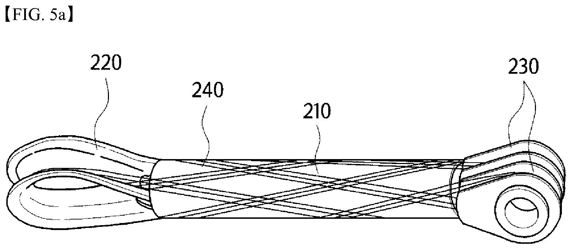

FIG. 3 is a process flow chart to describe a method of manufacturing a lashing bar of a composite material according to the present invention, FIG. 4 is a part drawing used in the manufacturing method of FIG. 3, FIG. 5a to 5c show the process of winding continuous fibers through the filament winding technique used in the manufacturing method of FIG. 3, and FIG. 6 and 7 show the lashing bar made of a composite material according to the invention.

To begin with, a method of manufacturing a lashing bar made of a composite material according to the present invention with reference to FIG. 3 is described as the step in which the prepared parts are assembled as shown in FIG. 4 and then loaded onto the filament winding machine (step 110).

According to this embodiment, the prepared parts consist of a cylindrical core (210), hook-type thimbles (220), and two ring-type thimbles (230).

The said cylindrical core (210) constitutes the core of the center portion and a metal pipe thick enough to resist bending when tension is applied during the winding of continuous fibers.

On one end of the cylindrical core (210) are assembled the hook-type thimbles (220) and on the other end are assembled one or two ring-type thimbles (230) facing each other.

In this embodiment, the aforementioned thimbles (220, 230) are made from metal and serve as a framework for the winding of continuous fibers during the lashing bar manufacturing process and later constitute the coupling portion of a lashing bar that can be coupled to the hooks of a container and put on other rings.

The parts thus assembled are loaded onto the filament winding machine as the lashing bar forming mold (200) and then help wind the continuous fibers (240) according to the filament winding program (step 120).

Generally, the filament winding process is a fabrication technique by which the continuous filaments of fiber-reinforced plastic (FRP) are wound around and attached onto the surface of a mandrel through the application of tension, heated and cured, and then removed from the mandrel. The technique is used in the manufacture of rotationally symmetrical structures such as cylindrical or spherical pressure vessels, tanks, and pipes.

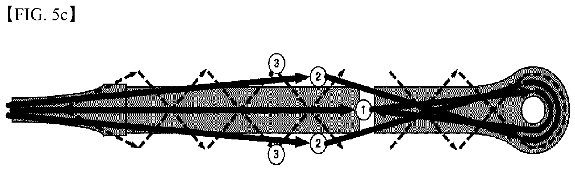

In the present invention, as shown in FIG. 5a or 5c, the aforementioned filament winding technique is applied to the alignment of the continuous fibers forming a composite material in the lashing bar forming mold (200) assembled with the central portion core (210) and the thimbles on both ends (220, 230).

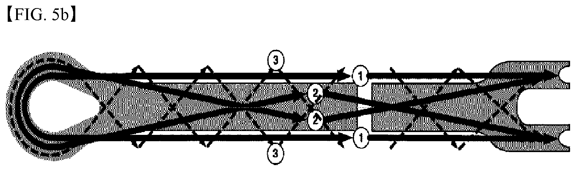

In aligning continuous fibers, as shown in the plan view of FIG. 5b, the most effective method of transmitting lengthwise tensile strength is the sub-step of ① by which to align the continuous fibers (240) passed through the holes of the hook-type thimbles (220) lengthwise (0 degrees).

Then, in the second alignment sub-step (②), the continuous fibers (240) are aligned at degrees not exceeding ±15 to minimize the loss of tensile strength while the fibers are evenly distributed lengthwise along the cylindrical core (210).

Then, in the third alignment sub-step (③), the continuous fibers (240) are aligned at ±40 to ±50 degrees to efficiently and adequately resist torsion loads that arise during installation.

In alignment order of ① → ② → ③, the winding of the continuous fibers (240) is to be repeated a certain number of times until the fibers are attached through the application of tension to the surface of the lashing bar forming mold (20).

FIG. 5c shows a front view of the alignment of the continuous fibers.

The types of the continuous fibers (240) to be applied in the present invention are glass, carbon, aramid, and polyethylene fibers. The tensile strengths of these fibers are generally higher than the tensile strength of high-tensile steels as shown in Table 1 below.

**[Table 1]**

| Classification | Specific gravity | Tensile strength (Mpa) | Tensile elasticity (Gpa) | Remarks |
|---|---|---|---|---|
| High-tensile steel | 7.8 | 550-950 | 200 | |
| Glass fiber | 2.6 | 3,100-3,800 | 75-78 | 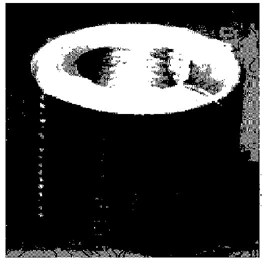 |
| Carbon fiber | 1.8 | 4,200-6,100 | 230-300 | 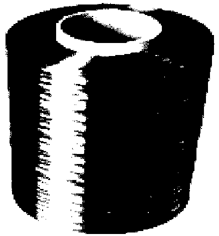 |
| Aramid fiber | 1.4 | 3,600 | 41-186 | 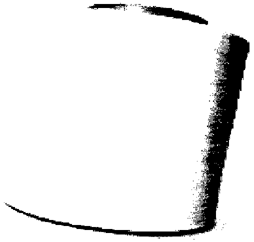 |
| Polyethylene fiber | 1.0 | 2,200-3,500 | 89-116 | 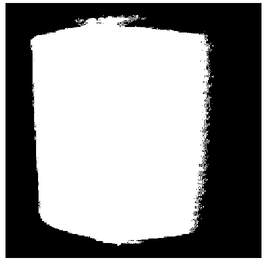 |

While the continuous fibers (240) forming the aforementioned composite material are wound and attached by tension to the surface of the lashing bar forming mold (200), the product is mounted in a rotating curing oven and then cured (step 130). Then, the product is transferred to the stripping/finishing process by which sharp edges on the surface are removed in a finishing workshop equipped with a dust collector (step 140).

Next, the stripped/finished product is tested for its capacity to withstand tensile and torsion loads (step 150) and, when the product meets its requirements, it is packaged and shipped (step 160).

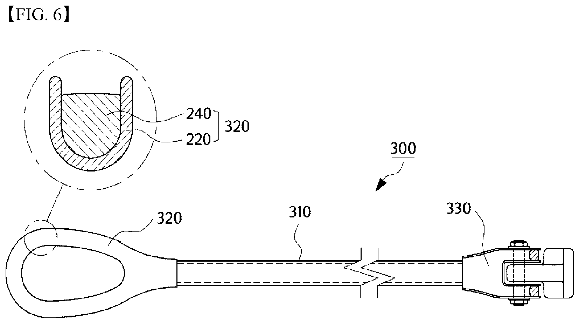

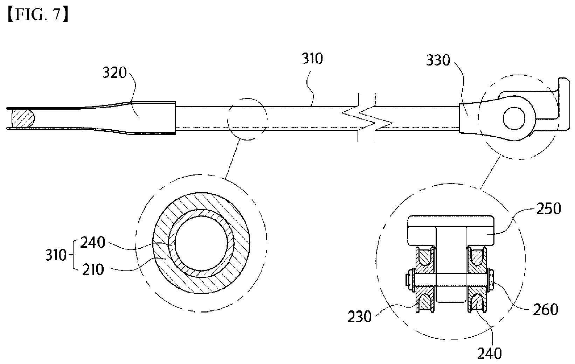

A lashing bar made of a composite material manufactured and finished through the aforementioned processes according to the present invention will have the shape shown in FIG. 6 and 7.

As shown in FIG. 6 and 7, the lashing bar made of a composite material provided in the present invention (300) is an eye type comprising a bar-shaped central portion (310), an oval coupling portion on one end (320) and a hook coupling portion on the opposite end (330).

As shown in an enlarged view, the oval coupling portion (320) comprises a hook-type metal thimble (220) featuring a hole into which the continuous fiber composite material (240) is integrated.

In the middle of the bar-shaped central portion (310) is located the metal cylindrical core (210) and on its outer circumference, the continuous fiber composite material (240) is integrated.

While its two metal ring-type thimbles (230) face each other, the hook coupling portion (330) is coupled to the container hook (250) in between the thimbles, and the bolts (260) pass the holes on the thimbles (230) fastening these hooks. Meanwhile, the continuous fiber composite material (240) is integrated into the holes of the ring-type thimbles (230).

Therefore, the lashing bar made of a composite material manufactured through the present invention (300) provides light weight and capacity to withstand tensile loads.

The foregoing description illustrates an embodiment of the invention pertaining to the manufacturing of eye-type lashing bars, but it will become apparent to those skilled in the art having read this detailed description that they can manufacture knob-type lashing bars through the alignment of continuous fibers through the above-described process of assembling the lashing bar forming mold (200) using the cylindrical core (210) on which stoppers are formed lengthwise at certain intervals.

The disclosed embodiment of the present invention is given by way of illustration only, and various changes and modifications within the spirit and scope of the invention will become apparent to those skilled in the art.

Therefore, such changes and modifications may be made without departing from the scope of the invention defined in claims.

## Claims

1. A method of manufacturing lashing bars of a composite material comprising,
(1) a step in which a forming mold (200) for the aforementioned lashing bar is formed by assembling a cylindrical core (210) featuring hook-type thimbles (220) on one end and ring-type thimbles (230) on the other and then loaded onto a filament winding machine;
(2) a step in which continuous fibers (240) are wound around the outer circumference of said loaded lashing bar forming mold (200) through the filament winding technique; and
(3) a step in which the filament wound composite product is cured to form a lashing bar
wherein the aforementioned step (2) consists of
(2a) the sub-step of aligning the continuous fibers (240) passed through the holes of said hook-type thimbles (220) lengthwise (0 degrees);
(2b) a sub-step in which said continuous fibers (240) are aligned at degrees not exceeding ±15 lengthwise along said cylindrical core (210); and
(2c) a sub-step in which said continuous fibers (240) are repeatedly aligned at ±40 to ±50 degrees to be wound.

2. The method as recited in claim 1, wherein
the aforementioned sub-step (1b) is a process in which two ring-type thimbles (230) are assembled on the other end of said cylindrical core (210) so as to face each other.

3. The method as recited in claim 1, wherein
the aforementioned sub-step (2) is a process in which the winding of the continuous fibers (240) is repeated a certain number of times until the fibers are attached through the application of tension to the surface of the lashing bar forming mold (200) in order of sub-steps (2a) to (2c).

4. The method as recited in claim 1, wherein whether eye-type lashing bars or knob-type lashing bars are manufactured can be chosen depending on the shape of said lashing bar forming mold (200).

5. The method as recited in claim 1, wherein said continuous fibers (240) can be chosen among glass, carbon, aramid, and polyethylene fibers.

6. A lashing bar of a composite material manufactured through any of the processes recited in claims 1 to 5,
wherein said lashing bar comprises a forming mold in which metal oval thimbles and ring-type thimbles are assembled on both ends of a metal cylindrical core (210), and filament-wound continuous fibers (240) that pass the core of the axis along the holes of the exterior surface and thimbles.

## Patentansprüche

1. Verfahren zur Herstellung von Zurrstangen aus einem Verbundwerkstoff, umfassend
(1) einen Schritt, bei dem ein Formgebungswerkzeug (200) für die vorgenannte Zurrstange durch Zusammenbau eines zylindrischen Kerns (210) ausgebildet wird, der hakenartige Hülsen (220) an einem Ende und ringartige Hülsen (230) an dem anderen Ende aufweist, und dann auf eine Faserwickelmaschine geladen wird;
(2) einen Schritt, bei dem Endlosfasern (240) durch die Faserwickeltechnik um den äußeren Umfang des geladenen Formgebungswerkzeugs (200) für die Zurrstange gewickelt werden; und
(3) einen Schritt, bei dem das fasergewickelte Verbundprodukt zur Ausbildung einer Zurrstange ausgehärtet wird,
wobei der vorgenannte Schritt (2) besteht aus
(2a) dem Teilschritt des Ausrichtens der Endlosfasern (240), die durch die Löcher der hakenartigen Hülsen (220) hindurchgeführt werden, in Längsrichtung (0 Grad);
(2b) einem Teilschritt, bei dem die Endlosfasern (240) in Winkeln von nicht mehr als ±15 Grad in Längsrichtung entlang des zylindrischen Kerns (210) ausgerichtet werden; und
(2c) einem Teilschritt, bei dem die Endlosfasern (240) wiederholt bei ±40 bis ±50 Grad ausgerichtet werden, um aufgewickelt zu werden.

2. Verfahren nach Anspruch 1, wobei
der vorgenannte Teilschritt (1b) ein Verfahren ist, bei dem zwei ringartige Hülsen (230) an dem anderen Ende des zylindrischen Kerns (210) so montiert werden, dass sie einander gegenüberliegen.

3. Verfahren nach Anspruch 1, wobei
der vorgenannte Teilschritt (2) ein Verfahren ist, bei dem das Aufwickeln der Endlosfasern (240) eine bestimmte Anzahl von Malen wiederholt wird, bis die Fasern durch die Anwendung von Spannung an der Oberfläche des Formgebungswerkzeugs (200) für die Zurrstange in der Reihenfolge der Teilschritte (2a) bis (2c) befestigt sind.

4. Verfahren nach Anspruch 1, wobei in Abhängigkeit von der Form des Formgebungswerkzeugs (200) für die Zurrstange ausgewählt werden kann, ob ösenartige Zurrstangen oder knopfartige Zurrstangen hergestellt werden.

5. Verfahren nach Anspruch 1, wobei die Endlosfasern (240) aus Glas-, Kohlenstoff-, Aramid- und Polyethylenfasern ausgewählt werden können.

6. Zurrstange aus einem Verbundwerkstoff, hergestellt durch eines der in den Ansprüchen 1 bis 5 genannten Verfahren,
wobei die Zurrstange ein Formgebungswerkzeug aufweist, in dem metallische ovale Hülsen und ringartige Hülsen an beiden Enden eines metallischen zylindrischen Kerns (210) montiert sind, und fasergewickelte Endlosfasern (240), die den Kern der Achse entlang der Löcher der äußeren Oberfläche und der Hülsen durchlaufen.

## Revendications

1. Procédé de fabrication de barres d'amarrage en matériau composite comprenant :
(1) une étape à laquelle un moule de formage (200) pour la barre d'amarrage mentionnée ci-dessus est formée par l'assemblage d'un noyau cylindrique (210) comportant des cosses de type crochet (220) à une extrémité et des cosses de type anneau (230) à l'autre extrémité et est ensuite chargée sur une machine de bobinage de filaments,
(2) une étape à laquelle des fibres continues (240) sont enroulées autour de la circonférence externe du dit moule de formage de la barre d'amarrage chargé (200) par la technique de bobinage des filaments et
(3) une étape à laquelle le produit composite de filament enroulé est cuit pour former une barre d'amarrage
**caractérisé en ce que** l'étape (2) mentionnée ci-dessus consiste en
(2a) la sous-étape d'alignement des fibres continues (240) passées à travers les trous des dites cosses de type crochet (220) dans le sens de la longueur (0 degrés),
(2b) une sous-étape à laquelle les dites fibres continues (240) sont alignées à des degrés ne dépassant pas ±15 dans le sens de la longueur le long du dit noyau cylindrique (210) et
(2c) une sous-étape à laquelle les dites fibres continues (240) sont répétitivement alignées entre ±40 et ±50 degrés pour être enroulées.

2. Procédé selon la revendication 1, **caractérisé en ce que** la sous étape (1b) mentionnée ci-dessus est un procédé dans lequel deux cosses de type anneau (230) sont assemblées à l'autre extrémité du dit noyau cylindrique (210) de manière à être face à face.

3. Procédé selon la revendication 1, **caractérisé en ce que** la sous-étape (2) mentionnée ci-dessus est un procédé au cours duquel le bobinage des fibres continues (240) est répété un certain nombre de fois jusqu'à ce que les fibres soient fixées à la surface du moule de formage de la barre d'amarrage (200) par l'application de tension dans l'ordre des sous-étapes (2a) à (2c).

4. Procédé selon la revendication 1, **caractérisé en ce que** soit des barres d'amarrage de type œil ou des barres d'amarrage de type bouton peuvent être fabriquées au choix en fonction de la forme du dit moule de formage de la barre d'amarrage (200).

5. Procédé selon la revendication 1, **caractérisé en ce que** les dites fibres continues (240) peuvent être choisies parmi des fibres de verre, de carbone, d'aramide et de polyéthylène.

6. Barre d'amarrage en matériau composite fabriquée selon l'un quelconque des procédés selon les revendications 1 à 5, **caractérisée en ce que** la dite barre d'amarrage comprend un moule de formage dans lequel des cosses ovales métalliques et des cosses de type anneau sont assemblées aux deux extrémités d'un noyau cylindrique métallique (210) et des fibres continues enroulées en filament (240) qui dépassent du noyau de l'axe le long des orifices de la surface extérieure et des cosses.
